# EUROPEAN PATENT APPLICATION

(11) **EP 0 580 584 A1**
(43) Date of publication of application: **02.02.1994**
(21) Application number: 92902888.4
(22) Date of filing: 31.12.1991
(51) Int. Cl.: F25B 17/08, F26B 21/08

(54) **SYSTEM AND DEVICE FOR REFRIGERATION BY ADSORPTION**

(71) Applicant: TECNICAS EMPRESARIALES PARA LA COMERCIALIZACION DE PRODUCTOS ECOLOGICOS YMEDIOAMBIENTALES, S.L. T.E.C.P.E.M.A.), E-28008 Madrid (ES)
(72) Inventor: GOMEZ MARTINEZ, Pablo, E-28008 Madrid (ES); IVANOV HRISTOV, Stanislav, E-28008 Madrid (ES)
(74) Representative: Polo Flores, Carlos
(86) International application number: ES9100096
(87) International publication number: WO9313368

(57) **Abstract**

The present invention relates to a new system for refrigeration by adsorption through decomposition of the refrigeration cycle into four distinct phases: heating, desorption, cooling and adsorption which are carried out in at least four different exchangers so that at each stage at least one of them is in one of the phases. In this way, it is possible to establish a flow of the heat carrier from the exchanger in the cooling phase to the exchanger in the heating phase thereby generating a heat recovery which increases the power of the system. The present invention also relates to a device appropriate for the application of the system. Amongst various applications, are included heat pumps and a drying machine.

## Description

### Technical aspects of the invention

The invention is a new system of refrigeration, based on the principle of adsorption. The patent also refers to a new device for the development and application of the new system. This invention is therefore to be included within the generic concept of equipment goods, and more specifically within the technical area of industrial systems and components.

It is a well - known fact that many current cooling systems are able to function inversely, i.e., they can work as heat pumps. This invention mainly refers to cooling equipment. Nevertheless, all the information given is also applicable to heat pumps, taking into account the exceptions which are mentioned in the appropriate places. One of the uses of the system also makes reference to devices used in drying.

### The background of the invention

Depending on the operating principle used, cooling systems are classified into three main groups: cooling systems which work by compression, cooling systems which work by absorption and cooling systems which work by adsorption.

Those cooling systems which work by compression give rise to the serious difficulty that their performance is limited due to the fact that they must be designed with a large number of moving parts. This also means that they are noisy in operation, and this could be a negative factor. Another negative aspect systems of this type is that they use substances which damage the environment.

Although cooling systems which work through absorption have the advantage of operating more silently, they do not give the same performance as those of the compression type. The substances they use as refrigerating agents are also health damaging in case of accident. These systems also suffer from the disadvantage of high pressures in their internal cycle.

Unlike absorption, in which the molecules of a fluid penetrate into a body, adsorption consists of the concentration of gases, vapours, liquids, or dispersed or colloid material over the surface of a substance. Cooling systems which operate using adsorption are currently the least developed and used.

Adsorption cooling systems use at least two agents or substances to work. These are the refrigerating agent (also termed the adsorbate) and the adsorbent. Another substance used to dissipate the heat extracted by the refrigerating agent from the area to be cooled also plays an important role. This substance is termed the heat carrying fluid, and may, for example, be air.

In conventional adsorption cooling systems the heat exchanger is of fundamental importance. This forms part of the adsorber. Heat exchangers transfer the heat from the refrigerating agent to the heat carrying fluid.

Known adsorption cooling systems contain two heat exchangers. These are filled with adsorbent material, with different levels of adsorbed refrigerating agent. A special feature of these systems is that they operate discontinuously. This is due to the fact that the adsorbent is a solid, so that it is incapable of flowing and renewing itself within the heat exchangers.
Many systems based on the principle of adsorption exist, of which the most advanced to date are those based on the use of zeolite as an adsorbent and water as adsorbate. This is due to the fact that zeolites can become saturated with adsorbate to almost 100% at a certain temperature and at low pressure.

The thermal possibilities of synthetic zeolites were studied in the German journal "Klimakalte - Heizung" (No. 1/1985) by specialists from the University of Munich. Nevertheless, possibilities for the industrial production of cooling systems are currently based on the use of natural zeolites.

For example, and as a pertinent document in gaining an understanding of the technique, there is the French invention patent applied for by JEUMONT - SCNEIDER, application number 547.827. This shows the method of placing the adsorbent in an energy absorbing device within adsorption - desorption apparatus.

Other documents which could be of relevance include the patents held by ZEO - TECH GMBH, E89120151 and E89120078. The first of these refers exclusively to a recipient for adsorption apparatus, while the second is of particular interest, given that it refers to a cooling system which works by adsorption. This is of special relevance, as while it is a refrigeration system, it does not possess the characteristics of heat recovery or the parametric distribution which this system has.

Other related publications are the applications by "International Thermal Packaging" (PCT7US90/05780 and PCT/US90/O5780). These refer to absorption or adsorption systems, and distribute water vapour in a series of volumes using temperature to carry out this distribution. The invention which referred to here does not use temperature to carry out distribution, while the cycle is divided into four phases, and the principle of the recovery of heat is also applied.

There are many advantages of adsorption systems against conventional cooling systems: they may be more efficient, of small size, with the possibility of using environmentally harmless natural substances which are not dangerous for peoples' health, the low pressures at which the cooling cycle takes place within a broad range of temperatures and high power, amongst others. The current limitations on the cooling systems which work by adsorption arise from the need for a design of a system and device able to work at an industrial level, efficiently expressing the principles of adsorption systems.

### Explanation of the invention

This invention show how the principles of adsorption systems for cooling may be efficiently applied within industry. The bracketed numbers refer to the detailed object in one or several of the figures contained in the technical drawings section.

In the explanation of the invention, the action which develops within a certain exchanger is termed a phase. The set of phases which an exchanger goes through is known as a cycle of the exchanger. The period of time during which certain phases occur in a group of exchangers is termed a stage. A change of stage is produced when at least one exchanger changes phase. The period of a cycle of an exchanger coincides with the period during which all the stages occur. It is due to this that the cyclical progression of states is also termed a cycle, of the adsorber in this case.

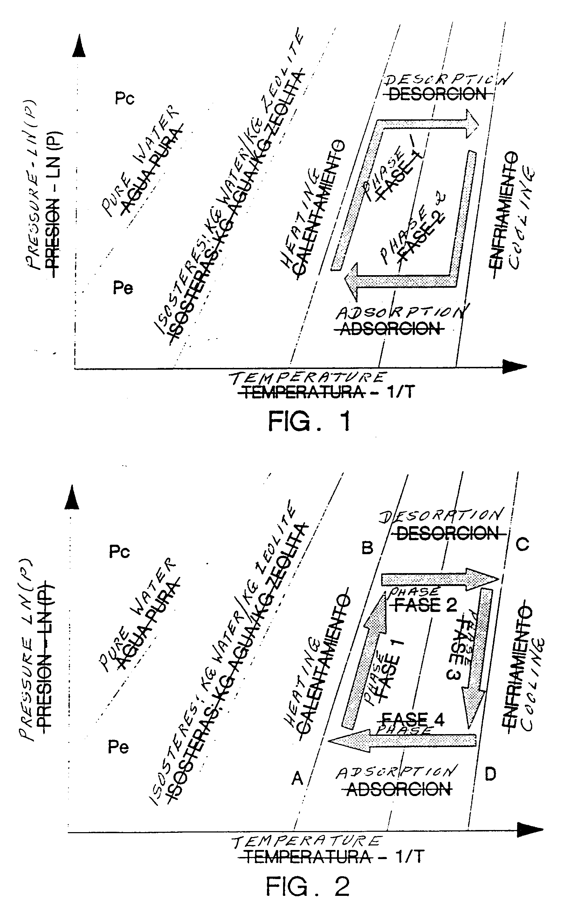

In known cooling systems which work by adsorption, the refrigeration cycle of the heat exchanger is divided into two phases. These are executed in each of the two heat exchangers of the adsorber. FIGURE 1 shows the conventional cycle used in known systems. The adsorbent is the zeolite, and the refrigerating agent or adsorbate is water vapour. The balance line of pure water and the lines of constant water content in zeolite (isosteres) are shown in the ideal diagram of the pressure logarithm and the inverse of the temperature. The phases of the figure enclose a complete cycle of refrigeration.; the phase of heating-desorption (PHASE 1) and that of cooling-adsorption (PHASE 2). The cycle is closed by two isosteres and two isobars, where Pc is the pressure of water condensation and Pe is the water evaporation pressure.

The invention referred to here divides the cooling cycle, as is shown in FIGURE 2, into four different phases:
- Preparation for desorption or heating; from point A to point B in FIGURE 2.
- Desorption; from point B to point C in FIGURE 2.
- Preparation for adsorption or cooling; from point C to point D in FIGURE 2.
- Adsorption; from point D to point A in FIGURE 2.

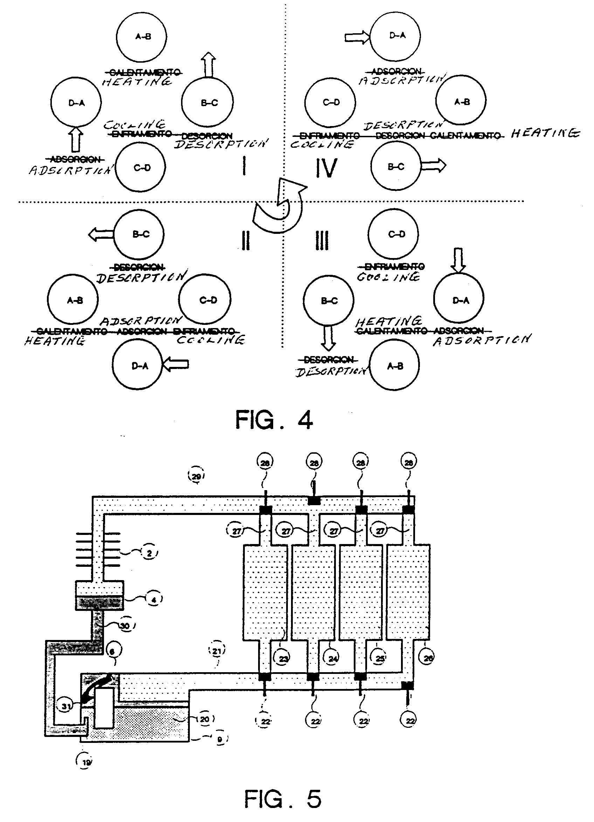

These four phases are carried out in a synchronized manner in four heat exchangers. The four heat exchangers are structurally identical. In a certain stage, each of the four heat exchangers is at a different phase of the cycle from the rest. Each heat exchanger passes to the next stage simultaneously with the other exchangers. Thus there is always a heat exchanger at each of the phases mentioned, as is shown in FIGURES 4 and 5.

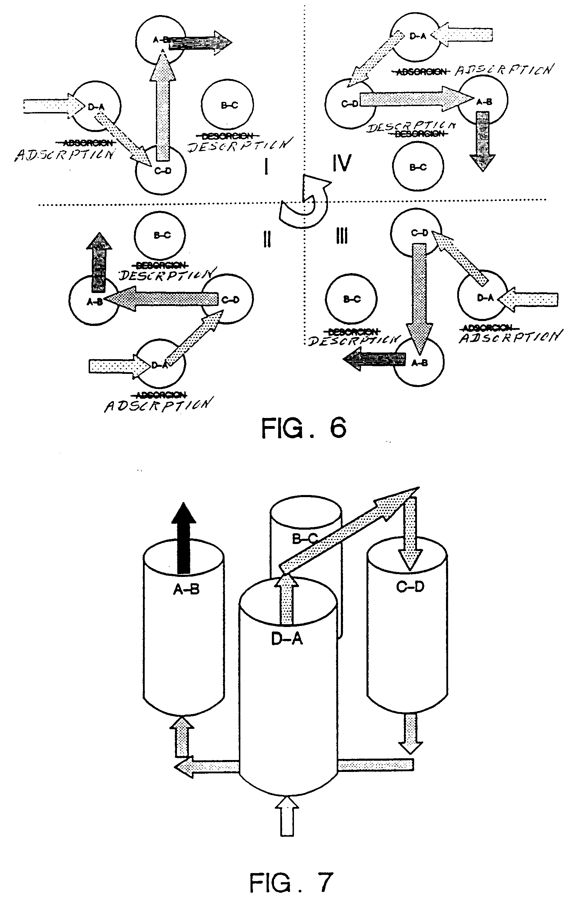

Through suitable distribution of the heat carrying fluid in its passage between exchangers, as is shown in FIGURES 6 and 7, excess heat from other heat exchangers is recovered, thereby increasing the efficiency of the system.

This flow distribution permits almost continuous or pseudo-continuous cooling, as evaporation occurs constantly. This arrangement and synchronization of the refrigeration cycles is termed the pseudo-continuous parameter operation of the distributed cycle.

The adsorbent material (41) can be prepared in the same way as that in which cermet filters are manufactured for heat transmission, together with the porosity of the zeolite, so that the adsorbate is able to pass easily through.

If the adsorbate is water, then it is possible to carry out a modification in the evaporator to improve its performance. This modification involves making the water flow through a chamber (31) before reaching the evaporator, so that the water enters through the upper part of the evaporator and is discharged through the lower part of the evaporator back into the chamber. This achieves a circulation (6) of the water within the evaporator.

To increase the power of the adsorber, it is possible to add different groups of heat exchangers, interconnected in a synchronized fashion, or with a certain phase difference, as is shown in FIGURES 12, 13 and 14.

The applied system is composed of four exchangers, as is shown in FIGURE 8, placed symmetrically around a central axis (FIGURE 9), with appropriate valve equipment (22, 28, 33, 34) insulation (43), manifolds (49, 54, 51, 52), heat supply equipment (32) and the "step by step" motor (16) (FIGURES 10 and 11).

### A short description of the drawings

FIGURE 1.- FIGURE 1 shows the refrigeration cycle in conventional adsorption cooling systems, in a logarithmic diagram of the pressure and inverse temperature.

FIGURE 2.- FIGURE 2 represents the refrigeration cycle within the cooling system of the invention to which this refers, in a logarithmic diagram of the pressure and inverse temperature.

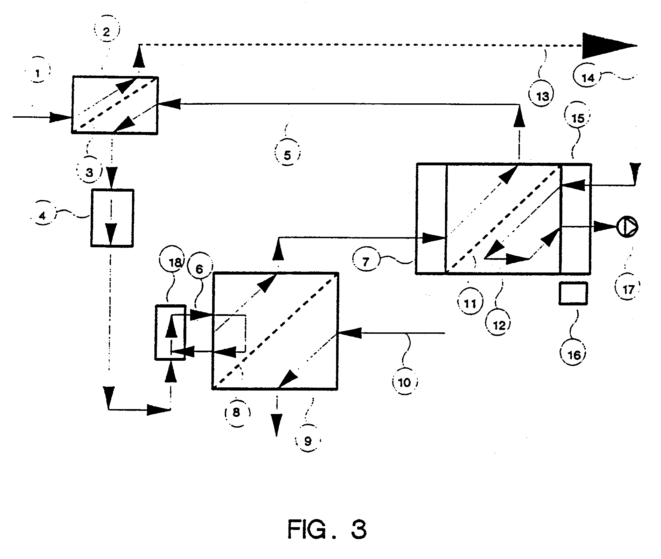

FIGURE 3.- FIGURE 3 shows a simplified diagram of system working, including refrigerating agent and heat carrier flow.

FIGURE 4.- FIGURE 4 shows the flow of the refrigerating agent in the four heat exchangers during the four phases of the cycle in each exchanger.

FIGURE 5.- FIGURE 5 shows a plan of the compete cycle of the refrigerating agent during one of the stages of the cycle.

FIGURE 6.- In FIGURE 6 the heat carrying fluid flow is shown within the heat exchangers during four stages of the cycle.

FIGURE 7.- FIGURE 7 shows the flow of heat carrying fluid within the heat exchangers during one of the stages of the cycle.

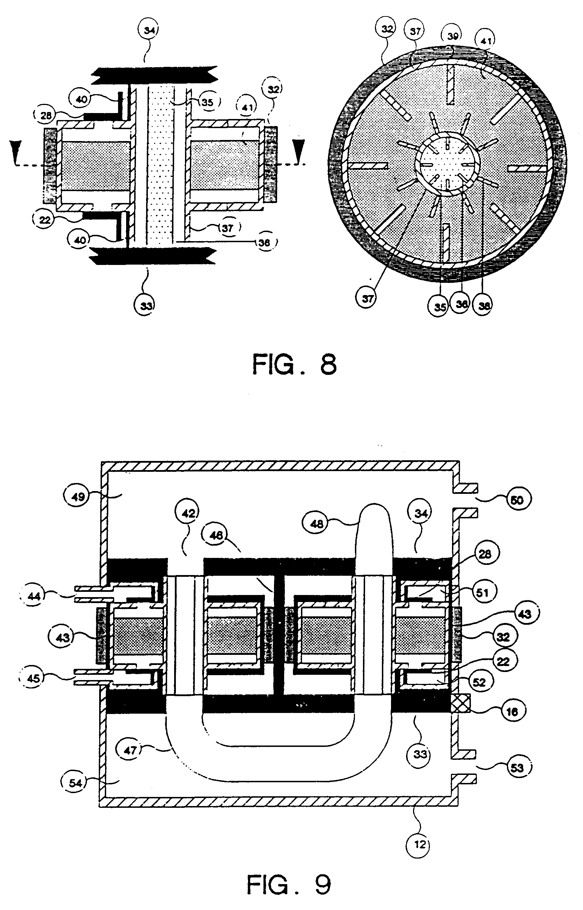

FIGURE 8.- In FIGURE 8 transverse and horizontal cross sections of one of the heat exchangers is shown.

FIGURE 9.- FIGURE 9 shows a transverse cross section of the adsorber together with the valve equipment.

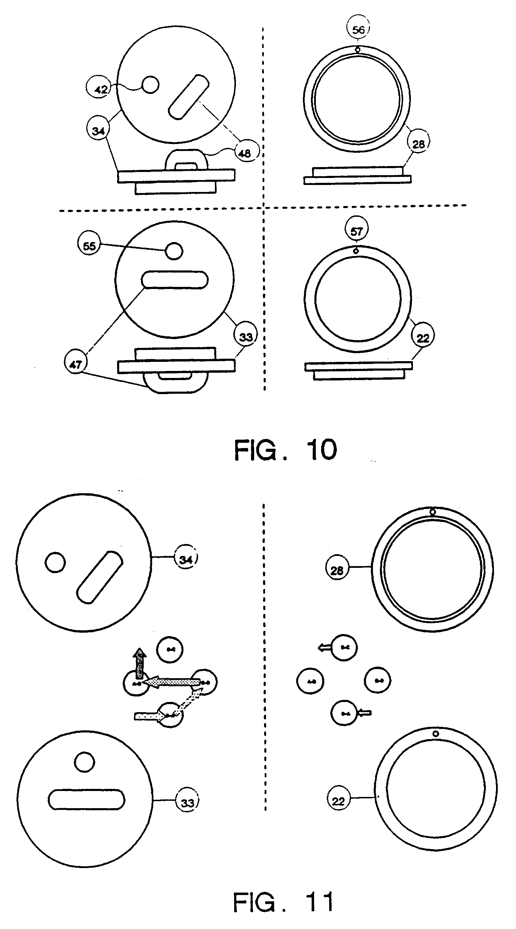

FIGURE 10.- FIGURE 10 shows different views of the adsorber valve equipment.

FIGURE 11.- FIGURE 11 shows the distribution of the valve equipment at a certain moment of working.

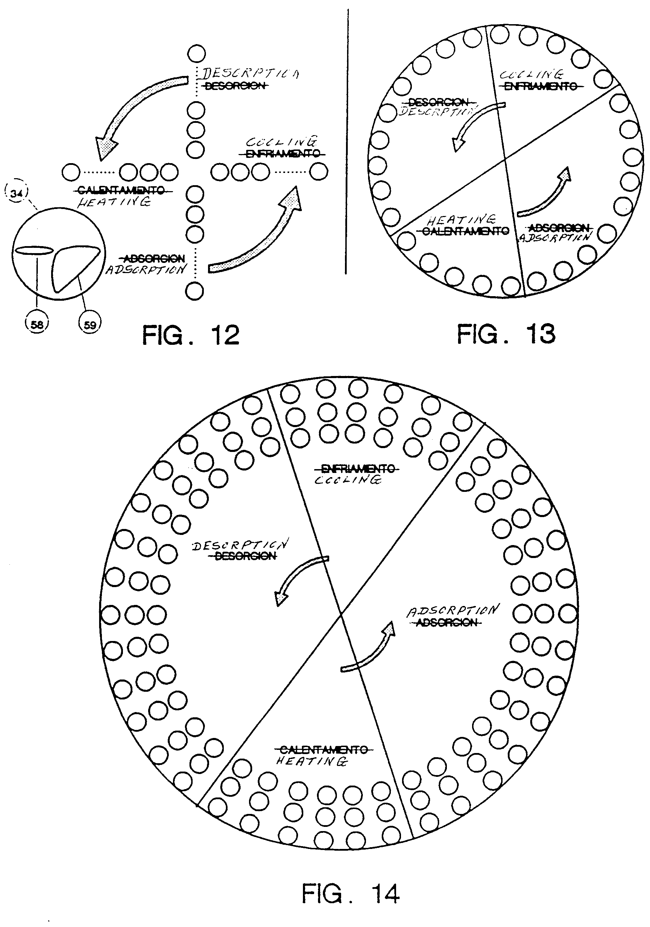

FIGURE 12.- FIGURE 12 shows the first method of increasing the power of the adsorber.

FIGURE 13.- In FIGURE 13 the second method of increasing the power of the adsorber is shown.

FIGURE 14.- FIGURE 14 shows the third way of increasing the power of the adsorber.

### Detailed description of the application of the invention

### A.- THE SYSTEM

The cooling system to which this patent refers has the same components as a conventional cooling system. A diagram of this is included in FIGURE 3. It is composed of a condenser (1); a receptor (4), an evaporator (9), an adsorber (12) and an extraction fan (17).

The refrigerating fluid circuit (5) passes through the condenser (2), and gives up its heat through the heat exchange zone (3) to the heat carrying fluid (1). The refrigerating agent (5) is condensed and collected in the receptor (4). The refrigerating agent (5) goes on to the evaporator (9) where the refrigerating agent extracts heat from the medium through the heat exchange zone (8). Following this, it passes through the distribution system of the refrigerating agent (7) to be adsorbed and desorbed within the heat exchangers., giving up its heat in the heat exchange zone (11) to the heat carrier (14). After flowing through the adsorber (12) it returns to the condenser (2) thereby closing its cycle.

The heat carrying fluid (14) passes through the distributor system of the heat carrier (15) to be heated through the heat exchange zone (11). The heat carrier (14) is kept in movement by the extractor action of the extraction fan (17). Working as a heat pump, the heat carrier (14) is fed through a connection (13) with the heat given off during the condensation through the fluid which has recovered this heat (1).

The cooling circuit is shown in greater detail in FIGURES 4 and 5. FIGURE 4 shows the details of a complete cycle for each one of the four heat exchangers found within the adsorber. The moment at which each exchanger adsorbs or desorbs vapour is also shown. It is evident that at each stage of the cycle, one exchanger is adsorbing while another is desorbing, thereby giving rise to the possibility of pseudo-continuous cooling.

FIGURE 5 shows a diagram of the flow of refrigerating agent at any one of the stages of the cycle. This shows the heat exchangers (27), each of which is at a certain phase of the cycle; heating (23), desorption (24), cooling (25) and adsorption (26). The vapour leaves the exchanger which is in desorption phase (24), flows through the upper distributor (28) of the refrigerating agent through a tube (29) into the condenser (2), while the condensed refrigerating agent (30) is collected in the receptor (4).

If the refrigerating agent (30) is water, then it goes into a circulation chamber (31) through a choke (19) under the water level in the chamber. The continuous flow of the water gives rise to a circulation (6) which reaches the upper part of the evaporator (9). In the evaporator (9) the water has a certain concentration of salt (20). This concentration is maintained, as the water which evaporates (21) is salt free. The evaporator (9) is also connected to the circulation chamber (31) through its base. If the refrigerating agent is not water, the refrigerating agent enters the evaporator (9) in a conventional manner.

Evaporation occurs and the vapour flows through the lower distributor (22) of the refrigerating agent to the exchanger during the adsorption phase (26). The circuit of the refrigerating agent ends thus during a stage.

The flow of the heat carrier within the adsorber is shown in FIGURES 6 and 7. FIGURE 6 shows a flow diagram of the heat carrier between the four heat exchangers throughout a cycle. It is evident that at each stage of the cycle the heat exchanger which is in a cooling phase gives up part of its heat to the heat exchanger which is in a heating phase through the flow of the heat carrier.

FIGURE 5 shows a three dimensional view of the flow of the heat carrier fluid between the heat exchangers during a certain stage.

During this phase the heat carrying fluid enters the heat exchanger which is in adsorption phase, passes through the exchanger which is in cooling phase and then goes on through the exchanger which is heating. This gives rise to the transfer of heat from those exchangers which need to cool to those which need to heat up, thereby achieving recovery of heat and increasing the performance of the system.

Working as a heat pump, the flow of the heat carrier fluid (14) passes through the condenser (2) beforehand, before going through the adsorber, and thereby recovering the heat.

The four exchangers can be considered to form a single cooling unit. To increase the power of the system, it is possible to interconnect as many basic units as may be wished. This connection may be undertaken in three different ways:
The first of these is shown in FIGURE 12, and works through synchronization of the phases of the basic units. I.e., if n basic groups exist, in a certain stage n exchangers will be working on adsorption, n on desorption, n working on heating and n on cooling. In FIGURE 12 each circle represents a heat exchanger. Changing phases is simultaneous for all the exchangers.

The second way of boosting power (FIGURE 13) works through phase displacement in time between the n basic groups, such that the duration of each phase is distinct. The change to the following stage occurs by changing the phase of only one basic group, and for each exchanger the area of phases shown in FIGURE 13 will be rotated. This second form allows for the possibility of designing the adsorber with an ideal number of exchangers. This does not have to be a multiple of four, in order to optimize the performance of the cycle.

The third way of increasing power is through a combination of the above two. FIGURE 14 shows a combination of three exchanges at the same moment of the phase with other groups of three at different moments and in different phases.

### B. THE DEVICE

The device resulting from this cooling system is basically composed of an adsorber (12), an evaporator (9), a conventional condenser (2) and an extraction fan (17). It also includes the tubes, ducts and valves needed for its connection, as is shown in the diagram of FIGURE 3.

The adsorber (12) holds the four heat exchangers which work through the four phases of heating, desorption, cooling and adsorption.

FIGURE 8 shows the details of cross and horizontal sections through a heat exchanger. The structure of the heat exchangers consists of a central cylinder (35) through which the heat carrier flows. This is joined longitudinally within a cylindrical ring, both shorter and wider than the first cylinder, and which contains the adsorbent material (41). The refrigerating agent flows through this cylindrical ring, where it is adsorbed and desorbed by the adsorbent material (41). The heat carrier cylinder and the refrigeration agent cylinder are only in contact through the central walls of the structure (37). the heating system (32) heats the adsorbent material during the process of desorption, and is placed over the external walls of the cylindrical ring.

The cylinder of the heat carrier and the refrigerating agent cylindrical ring each have two valves. One is at the inlet and the other at the outlet, such that fluid flow can be controlled (22, 28, 33, 34). These valves are linked to their respective manifolds, which are interlinked with the other heat exchangers within the adsorber.

Both the heat carrier cylinder and the cylindrical ring of the refrigerating agent are equipped with a series of internal ribs (36, 38, 39).

A cross section of the adsorber is shown in detail in FIGURE 9. The four heat exchangers are arranged symmetrically around a central axis, and the longitudinal axes of the heat exchangers are parallel to this central axis. Two circles (33 and 34) are placed above and below the heat exchangers to block the bases of the four exchangers. Both circles (33 and 34) are rigidly joined through a central axis (46). These circles have apertures (42, 55) and tubular connections (47, 48) which act as distributors for the heat carrying fluid. The circles (33, 34), their apertures and tubular connections are denominated heat carrier distributors. Both distributors rotate periodically through the action of a "step by step" motor (16).

FIGURES 10 and 11 show different views of the distributors. The upper distributor of the heat carrier (34) has an aperture (42) which gives on to the outlet manifold of the heat carrier (49) which is always at the heat exchanger which is in heating phase. It also has a tubular connection (48) from the exchanger in adsorption phase to that which is in cooling phase. The heat carrying fluid flows due to the action of an extractor fan (17) located after the outlet manifold of the heat carrier (49).

The distributors of the heat carrier have ribs in the form of rings over their inner surfaces. These facilitate the synchronization of the heat carrier distributors and the refrigerating agent distributors. This is shown in detail in FIGURE 8 (40).

Thermal insulation (43) is located between the upper distributor (34) and the cylindrical ring which contains the adsorbent material (41). This insulation insulates the entire circuit of refrigerating agent within the adsorber. I.e., manifolds of the refrigerating agent (51, 52) and cylindrical rings of adsorbent (41) in the heat exchangers. The type of heating which occurs shows us if the heating system (32) must be inside or outside the insulation (43). If a conventional heating system is used, the insulation should cover it. It is uses water as a refrigerating agent, and if a microwave heating system is used, the insulation should be of the ceramic type, and the system could be located outside the insulation. This is the case in FIGURE 9. FIGURE 8 shows the other type of case, in which the insulation has not been shown, and covers the heat supplying device.

The valves of the cooling system are located on the outside of the cylindrical rings respecting the central axis, and they open onto the inlet (52) and outlet (51) manifolds of the refrigerating agent. The valves are opened and closed by two rings (22, 28) which surround the four heat exchangers, within the manifold of the refrigerating agent (51, 52). Some views are shown in FIGURES 10 and 11. These rings act as distributors of the refrigerating agent. These ring distributors (22, 28) have an opening (57, 57) which rotates in a synchronized manner with the heat carrier distributors. This synchronization is achieved through magnetic coupling (40) of the refrigerator distributors (22, 28) with the heat carrier distributors (33, 34), as the insulation (32) prevents direct connection between both sets of valves. The ring distributor (28) of the outlet manifold (51) always has its opening (56) over the exchanger which is in desorption phase. The opening of the ring distributor (22) of the admission manifold always has its opening (57) located at the exchanger which is in adsorption phase.

FIGURE 10 shows views of all the distributors. It shows a profile view and one from above of the upper heat carrier distributor (34), a profile and view from below of the lower heat carrier distributor (38), a profile and view from above of the upper distributor (28) of the refrigerating agent, and a profile and view from below of the lower (22) refrigerating agent distributor.

FIGURE 11 shows views from above and below of the upper and lower distributors at a certain stage of the cycle, corresponding to the phases of the exchangers shown.

To increase the power of the adsorber, as is mentioned above in the description of the system, all the working of the machine is similar to that described, except in the shape and number of distributors. Although the heat carrier distributors are circular, their openings and tubular connectors must be of a size which allows them to hold the heat carrier of all the exchangers involved. FIGURE 12 shows details of the new shape of aperture (58) for the upper distributor of the heat carrier (34), as well as the shape of the tubular connection (59).

The distributors of the refrigerating agent remain ring - shaped and centered on the axis, but the shape of their apertures and the number of ring distributors vary according to the type of combination selected. FIGURES 12, 13 and 14 are shown in the direction in which the distributors turn.

When the refrigerating agent is water, the evaporator (9) could feature a modification respecting conventional evaporators to improve its performance. FIGURE 5 shows how this could be made. A quantity of salt (ClNa, Cl₂Ca or others) could be incorporated in the evaporator (9) to lower the temperature at which the water evaporates. When the condensed water reaches the condenser (2) the end of the tube has a choke diaphragm (19) which has the purpose of preventing the water from freezing. This tube goes into a cavity known as the circulation chamber (31) before reaching the evaporator. The circulation chamber (31) is linked to the evaporator (9) from which salt water flows. The choke diaphragm opens below the level of the salt water (20). The water rises through the chamber and enters the evaporator from above (6). The salt - free water evaporates and thereby maintains the concentration of salt. The lower part of the evaporator (9) is connected to the circulation chamber, and the salt water (20) flows to maintain a circuit which increases the efficiency of the evaporator (9).

Working as a heat pump, a tube would connect the condenser (2) with the admission manifold (54) of the heat carrier, to collect and use the heat given off during condensation, thereby increasing the performance of the system.

Another possible application is the use of the adsorber in FIGURE 9 as a drier. Due to the adsorbent power of the zeolite, if the refrigerating agent is water then the mouth of the water vapour inlet manifold (45) must be connected to the chamber to be dried, and the mouth of the outlet manifold (44) must be located outside.

## Claims

1. A cooling system which works by adsorption, characterized by the existence within the adsorber of exchangers which carry out the cooling cycle in four different phases: warming, desorption, cooling, adsorption.

2. According to claim 1 the system is characterized by the exchange of heat through the heat carrying fluid, giving up heat from the exchangers which are in cooling phase to those exchangers which are in heating phase.

3. A system according to claim 2 which is characterized by the fact that the exchangers carry out the cycle in a synchronized manner, such that the number of exchangers at each of the phases during each stage of the cycle is the same, and all exchangers pass to the next phase simultaneously, coinciding in stage and phase duration.

4. A system according to claim 2 which is characterized by the fact that the exchangers carry out cycles in a synchronized manner, such that during each stage there is at least one exchanger at each phase, while the duration of the phase is variable, and the change to the following stage is undertaken by a change of phase of some exchangers, it not being necessary for all the exchangers to change phase for a change of stage to take place.

5. A system, according to claims 1, 2 and 3 which is characterized by its use as a heat pump through adsorption.

6. A system, according to claims 1, 2 and 4, which is characterized by its use as a heat pump through adsorption.

7. A device for the application of the system according to claims 3, 4, 5 and 6, characterized by the fact that the exchangers of the adsorber are composed of a metal cylinder, through which the heat carrier flows, fitted within a cylindrical ring containing the adsorbent and through which the refrigerating agent flows.

8. A device according to claim 7 which is characterized by the fact that the metal ring of the refrigerating agent has two apertures, upper and lower, which connect with two manifolds, one for outlet and one for inlet, which link all the cylindrical rings of the exchangers of the adsorber.

9. A device according to claim 7 which is characterized by the fact that the cylinder of the heat carrying fluid has two apertures, upper and lower, which connect with two manifolds, one for outlet and one for inlet, which link all the cylinders of the exchangers of the adsorber.

10. A device according to claim 7 characterized by a symmetrical arrangement of the exchangers within the adsorber around a central axis, while the longitudinal axis of the exchangers is parallel to said central axis.

11. A device according to claims 8, 9 and 10 which is characterized by a system of valves for the heat carrying fluid, composed of an upper and a lower circuit, centered on the axis of the adsorber, closing the bases of the cylinders of the heat carrier, with apertures and tubular connections which allow adequate circulation of the heat carrier through the exchangers.

12. A device according to claims 8, 9 and 10 which is characterized by a system of valves for the refrigerating agent, composed of circular rings located above and below the apertures of the cylindrical rings centered around the axis of the adsorber, with an aperture which rotates to allow the proper distribution of the refrigerating agent, located at the centre of the rings within the axis of symmetry.

13. A device according to claims 11 and 12, characterized by the fact that the circuit of the refrigerating agent within the adsorber is covered by thermal insulation.

14. A device according to claim 13, characterized by magnetic coupling between the valve systems of the refrigerating agent and the heat carrier.

15. A device according to claims 11 and 12 characterized by the fact that the valve system is moved by a "step by step" motor.

16. A device according to claim 7 which is characterized by the fact that the cylindrical ring of the refrigerating agent has a device to supply heat energy on its external surface.

17. A device according to claim 16 which is characterized by the fact that the device supplying heat energy is of the microwave type, when the refrigerating agent is either water or water vapour.

18. A device according to claim 17 which is characterized by the fact that the insulation used is of the ceramic type, and the device which supplies heat energy is outside this insulation.

19. A device according to claim 7 which is characterized by prior treatment of the adsorbent similar to the treatment used in the preparation of cermet filters.

20. A device according to claims 3, 4, 5 and 6 which is characterized by the fact that, if the refrigerating agent is water, then in the evaporator the tube which enters from the condenser first discharges into a chamber which is below the level of a salt water solution.

21. A device according to claim 20, characterized by the fact that the chamber before is connected to the evaporator through its upper part, through which water enters the evaporator, and through its lower part, where the evaporator maintains the flow of the solution.

22. A device according to claims 11, 12, 15 and 16, characterized by the fact that when the refrigerating agent is water, it is used in open circuit as a drier, coupled to the mouth of the inlet manifold of the refrigerating agent to the chamber to be dried, and to the mouth of the outlet manifold of the refrigerating agent to the outside.

## Amended claims

### Amended claims under Art. 19.1 PCT

**1.** A cooling system working by adsorption which is characterized by the fact that the number of exchanges in the heating and cooling phases is greater than the number of exchangers which are in adsorption and desorption phase, while passage to the next stage takes place through the change of phase of some exchangers, it not being necessary that all exchangers change phase for a change of state to take place.
**2.** A cooling system working by adsorption according to claim 1, characterized by the existence of thermal compression between two isosteres in heating and cooling phases.
**3.** A cooling system working by adsorption, according to claim 1, characterized by the fact that the number of exchangers in heating and cooling phases is in direct proportion to the ratio of compression between the pressure of condensation and evaporation.
**6.** A system, according to claims 1, 2, and 3 which is characterized by its usage as a heat pump working through adsorption.
**8.** A cooling device working by adsorption to apply the system according to claims 1, 2 and 3 and characterized by the fact that the cylindrical rings of the refrigerating agent within the exchangers are interconnected by two manifolds, one for inlet and the other for outlet, above and below the cylindrical bases of the said cylindrical rings.
**11.** A cooling device working by adsorption which applies the system according to claims 1, 2 and 3 and characterized by a system of valves for the heat carrying fluid, including:
a) an upper and a lower circle, centered on the axis of the adsorber, closing the bases of the cylinders of the heat carrier.
b) apertures in the circles and tubular connections from part of each circle to another part of the same circle, thereby allowing proper circulation of the heat carrier through the exchangers within a manifold.
**12.** A cooling device working by adsorption, which applies the system according to claims 1, 2 and 3 characterized by a system of valves for the refrigerating agent which includes:
a) two circular rings located above and below the apertures of the cylindrical rings centered around the axis of the adsorber and located in the interior of the refrigerating agent manifolds.
b) An aperture, in each ring, which rotates to permit the proper distribution of the refrigerating agent through the different exchangers.
**13.** A device according to claims 11 and 12 characterized by the fact that the circuit of the refrigerating agent within the adsorber is covered by thermal insulation.
**14.** A device according to claim 13, characterized by the existence of coupling between the valve systems of the refrigerating agent and heat carrier, such that all the valves move in a synchronized manner.
**15.** A device according to claims 11 and 12 characterized by the fact that the valve system is moved by a "step by step" motor.
**16.** A device according to claims 11 and 12 characterized by the fact that the cylindrical ring of the refrigerating agent has a device for the supply of heat energy on its external surface.
**17.** A device according to claim 16, characterized by the fact that the device which supplies heat energy is of the microwave type, when the refrigerating agent is water or water vapour.
**18.** A device according to claim 17 which is characterized by the fact that the insulation used is of the ceramic type, and the device which supplies heat energy is outside this insulation.
**19.** A device according to claims 8, 11 and 12 which is characterized by prior treatment of the adsorbent similar to the treatment used in the preparation of cermet filters.
**20.** A device according to claims 1, 2, 3 and 6 which is characterized by the fact that, if the refrigerating agent is water, then in the evaporator the tube which enters from the condenser first discharges into a chamber which is below the level of a salt water solution.
**21.** A device according to claim 20, characterized by the fact that the chamber before is connected to the evaporator through its upper part, through which water enters the evaporator, and through its lower part, where the evaporator maintains the flow of the solution.
**22.** A device according to claims 11, 12, 15 and 16, characterized by the fact that when the refrigerating agent is water, it is used in open circuit as a drier, coupled to the mouth of the inlet manifold of the refrigerating agent to the chamber to be dried, and to the mouth of the outlet manifold of the refrigerating agent to the outside.

Statement under Art. 19.1 PCT
The original claims 1,2,3 and 5, related to the system and category X in international search report have been cancelled. Applicant's original claim 4 related to the system is subdivided into three claims in order to clarify the original claim. This claims determine an specific and high efficient reverse Carnot cycle that could be moved at different temperature diapazone. Drawings 13 and 14 explains this working scheme were the number of heat-exchangers in each of the phases is not the same.

The original claim 7, related to the heat-exchangers structure and category Y in international search report, has been cancelled. Claims 9 and 10, also related to the type of heat exchangers have been cancelled. The rest of the anmendments related to the apparatus determines the specific set of linkages and interactions among the different parts of the apparatus.
